# EUROPEAN PATENT APPLICATION

(11) **EP 4 750 028 A1**
(43) Date of publication of application: **27.05.2026**
(21) Application number: 24847672.3
(22) Date of filing: 28.04.2024
(51) Int. Cl.: H04L 49/25

(54) **ROUTING INFORMATION PROCESSING METHOD AND APPARATUS FOR ASYMMETRIC ROUTING**

(30) Priority: 31.07.2023 CN 202310955983
(71) Applicant: Sanechips Technology Co., Ltd., Shenzhen, Guangdong 518055 (CN)
(72) Inventor: HAN, Yebing, Shenzhen, Guangdong 518055 (CN)
(74) Representative: Cristinelli, Luca
(86) International application number: PCT/CN2024/090423
(87) International publication number: WO 2025/025706

(57) **Abstract**

Embodiments of the present disclosure provide a routing information processing method and apparatus for asymmetric routing. The method includes: acquiring a destination bandwidth and a source bandwidth of a first-stage switch fabric SF1; determining a first weight coefficient on the basis of the destination bandwidth and the source bandwidth, and allocating the destination bandwidth to a source switch access, SA, according to the first weight coefficient; and determining a second weight coefficient on the basis of the duty ratio of an efficient link of the source SA, and according to the second weight coefficient, allocating the destination bandwidth, which is allocated to the source SA to the efficient link of the source SA, so as to realize the routing information processing process.

## Description

### Cross-Reference to Related Application

The present disclosure claims the priority of Chinese Patent Application CN202310955983.3, filed on 31 July 2023 and entitled "Routing Information Processing Method and Apparatus for Asymmetric Routing", the disclosure of which is incorporated herein by reference in its entirety.

### Technical Field

The embodiments of the present disclosure relate to the field of communications, and in particular, to a routing information processing method and apparatus for asymmetric routing.

### Background

The three-stage switching network of a packet switching system refers to a networking mode in which data sent by a source Switch Access (SA) first passes through a Switch Fabric (SF) configured in SF1 mode, then is switched through an SF configured in SF2 mode, and finally passes through an SF configured in SF3 mode to reach a destination SA, wherein the SF1 mode and the SF3 mode are respectively components of the SF, which together form a complete SF. With the development of packet switching technology, when the source SA and the destination SA are located at the same side of the SF1, that is, the destination SA is at a local end of the SF1, the data sent by the source SA can be directly forwarded through the SF1 to the destination SA, without passing through the intermediate SF2.

For the SF, the total input bandwidth of the source links should be less than or equal to the physical bandwidth that can be carried by the destination link, so as to ensure that congestion does not occur in the SF. When the SF causes a reduction in the bearing bandwidth of the destination link due to certain anomaly or in certain specific application scenarios, a situation where the input bandwidth is greater than the output bandwidth will occur, which is referred to as asymmetry. The asymmetry may result in congestion inside the switching system, thereby reducing switching performance. For the SF, by calculating the bandwidth of the destination link to close the source routes and reduce the sending of the source traffic, congestion of the SF can be avoided. For the first-stage switch fabric SF1, when the destination is a remote SA, the destination bandwidth of the SF1 is calculated as the bandwidth of all shared links at the egress, while the source bandwidth is calculated as the bandwidth of the exclusive link of the SA ingress, and the bandwidth of the exclusive link of the SA ingress is generally far less than the bandwidth of all shared links at the egress. The existing SF1 has great limitations on asymmetric application, and the traffic distribution on the switching system is also prone to unevenness, leading to problems of local congestion and packet loss when asymmetry occurs in the first-stage switch fabric SF1 in the three-stage switching network system.

### Summary

Embodiments of the present disclosure provide a routing information processing method and apparatus for asymmetric routing, so as to at least solve the problem in the related art of local congestion and packet loss when asymmetry occurs in the first-stage switch fabric SF1 in a three-stage switching network system.

According to one embodiment of the present disclosure, provided is a routing information processing method for asymmetrical routing, including: acquiring a destination bandwidth and a source bandwidth of a first-stage switch fabric SF1;determining a first weight coefficient on the basis of the destination bandwidth and the source bandwidth, and allocating the destination bandwidth to a source switch access (SA) according to the first weight coefficient; and determining a second weight coefficient on the basis of a duty ratio of a valid link of the source SA, and allocating the destination bandwidth, which is allocated to the source SA, to the valid link of the source SA according to the second weight coefficient, so as to realize routing information processing.

According to another embodiment of the present disclosure, provided is a routing information processing apparatus for asymmetrical routing, including: a bandwidth acquisition module, configured to acquire a destination bandwidth and a source bandwidth of a first-stage switch fabric SF1; a first allocation module, configured to determine a first weight coefficient on the basis of the destination bandwidth and the source bandwidth, and allocate the destination bandwidth to a source switch access (SA) according to the first weight coefficient; and a second allocation module, configured to determine a second weight coefficient on the basis of a duty ratio of a valid link of the source SA, and allocate the destination bandwidth, which is allocated to the source SA, to the valid link of the source SA according to the second weight coefficient, so as to realize routing information processing.

According to still another embodiment of the present disclosure, further provided is a computer readable storage medium, storing a computer program therein, wherein the computer program is configured to execute the steps in any one of the above method embodiments when running.

According to still another embodiment of the present disclosure, further provided is an electronic apparatus, including a memory and a processor; the memory stores a computer program, and the processor is configured to run the computer program so as to execute the steps in any one of the above method embodiments.

### Brief Description of the Drawings

Fig. 1 is a schematic diagram of a three-stage switching network structure in the related art;
Fig. 2 is a hardware structure block diagram of a computer terminal for a routing information processing method for asymmetrical routing according to an embodiment of the present disclosure;
Fig. 3 is a flowchart of a routing information processing method for asymmetrical routing according to an embodiment of the present disclosure;
Fig. 4 is a schematic diagram of the remote/local end of the SF1 in a three-stage switching network structure according to an embodiment of the present disclosure;
Fig. 5 is a structural block diagram of a routing information processing apparatus for asymmetrical routing according to an embodiment of the present disclosure;
Fig. 6 is a schematic flow diagram of a routing information processing method for asymmetrical routing according to an embodiment of the present disclosure.

### Detailed Description of the Embodiments

The embodiments of the present disclosure are described in detail with reference to the accompanying drawings and in conjunction with the embodiments.

It should be noted that the terms "first", "second" etc. in the description, claims, and accompanying drawings of the embodiments of the present disclosure are used to distinguish similar objects, and are not necessarily used to describe a specific sequence or order.

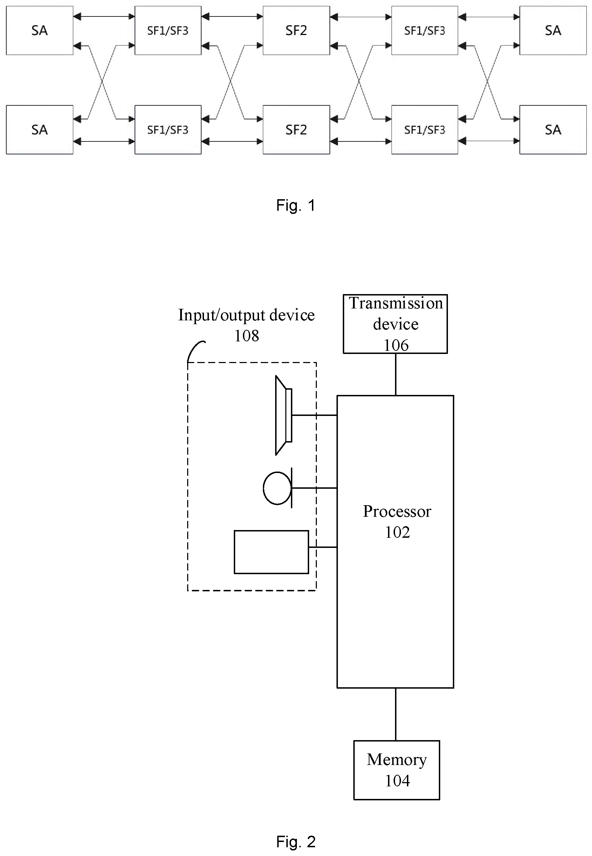

Fig. 1 is a schematic diagram of a three-stage switching network structure in the related art; as shown in Fig. 1, in the three-stage switching network structure of the packet switching system in the related art, the three-stage switching network refers to a networking mode in which data sent by the source SA reaches the destination SA only after passing through the SF three times, that is, the data sent by the source SA first passes through the SF configured in SF1 mode, than is switched through the SF configured in SF2 mode, and finally reaches the destination SA through the SF configured in SF13 mode. When the destination SA is at the local end of the SF1, the data sent by the source SA can also be directly forwarded through the SF1 to the destination SA, without passing through the intermediate SF2.

For the first-stage switch fabric SF1, when the destination is the remote SA, the destination bandwidth of the SF1 is calculated as the bandwidth of all shared links at the egress, while the source bandwidth is calculated as the bandwidth of the exclusive link of the SA ingress, and the bandwidth of the exclusive link of the SA ingress is generally far less than the bandwidth of all shared links at the egress. Therefore, the existing SF1 asymmetry is difficult to achieve the desired effect, and during the SF1 asymmetry calculation, there is no distinction between whether the destination SA is a remote SA or a local SA. The existing asymmetry application of the SF1 has significant limitations.

At the same time, the existing asymmetric scheme, when closing the source routing, selects links randomly or allocates them according to the order of source SA links, and directly closes the corresponding link routing, that is, the link is either connected or disconnected. In this way, the traffic distribution on the switching system may also been uneven.

The method embodiment provided in the embodiments of the present application may be executed in a mobile terminal, a computer terminal, or a similar computing device. Taking the computer terminal running as an example, Fig. 2 is a hardware structure block diagram of a computer terminal for a routing information processing method for asymmetrical routing according to an embodiment of the present disclosure. As shown in Fig. 2, the computer terminal may include one or more (only one is shown in Fig. 2) processors 202 (the processors 202 may include, but are not limited to, a microprocessor MCU or a processing device such as a programmable logic device FPGA) and a memory 204 configured to store data, wherein the computer terminal can further include a transmission device 206 for a communication function and an input/output device 208.Those ordinarily skilled in the art can appreciate that the structure shown in Fig. 2 is for illustrative purposes only, but not limit the structure of the computer terminal. For example, the computer terminal may also include more or fewer components than those shown in Fig. 2, or have different configurations from that shown in Fig. 1.

The memory 204 may be configured to store a computer program, for example, a software program and a module of application software, such as a computer program corresponding to the routing information processing method for asymmetrical routing in the embodiment of the present invention. The processor 202 runs the computer program stored in the memory 204, so as to execute various function applications and data processing, that is, to implement the foregoing method. The memory 204 may include a high-speed random access memory, and may also include a non-transitory memory, such as one or more magnetic storage apparatuses, flash memories, or other non-transitory solid-state memories. In some instances, the memory 204 may further include a memory remotely located from the processor 202, and the remote memory may be connected to the computer terminal by a network. Examples of the network above includes, but is not limited to, an Internet, intranets, a local area network, a mobile communication network, and combinations thereof.

The transmission device 206 is configured to receive or transmit data over a network. Specific examples of the described network may include a wireless network provided by a communication provider of the mobile terminal. In an example, the transmission device 206 may include a Network Interface Controller (NIC) that may be coupled to other network devices by a base station, so as to communicate with the Internet. In an example, the transmission device 206 can be a Radio Frequency (RF) module for communicating wirelessly with the Internet.

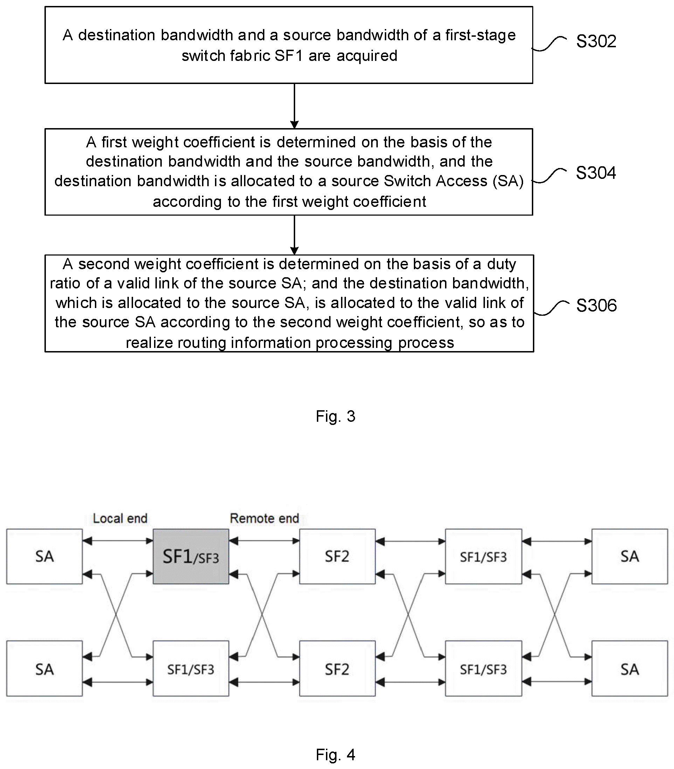

The present embodiment provides a routing information processing method for asymmetrical routing running on the above computer terminal. Fig. 3 is a flowchart of a routing information processing method for asymmetrical routing according to an embodiment of the present disclosure. As shown in Fig. 3, the flow includes the following steps:
Step S302: a destination bandwidth and a source bandwidth of a first-stage switch fabric SF1 are acquired.

In an exemplary embodiment, before acquiring the destination bandwidth and the source bandwidth of the first-stage switch fabric SF1, the method further includes: setting a first tag signal and a second tag signal for SAs and switch links of the first-stage switch fabric SF1 respectively, wherein the first tag signal is used for indicating that the SAs are local SAs or remote SAs, and the second tag signal is used for indicating that the switch links are local links or remote links.

In the actual implementation process, the local and remote scenarios can be distinguished by means of tag signals. Fig. 4 is a schematic diagram of the remote/local end of the SF1 in a three-stage switching network structure according to an embodiment of the present disclosure. As shown in Fig. 4, for the SF1, two SAs on the left side are local SAs, and two SAs on the right side are remote SAs. The number of the above SAs is only an example, and is not specifically limited.

In an exemplary embodiment, acquiring the destination bandwidth and the source bandwidth of the first-stage switch fabric SF1 includes: acquiring a destination bitmap of a destination SA and a source bitmap of the source SA on the basis of the second tag signal; and acquiring the destination bandwidth and the source bandwidth on the basis of the destination bitmap and the source bitmap respectively.

In the actual implementation process, a bitmap is generally used to indicate a path connection relationship between a current chip and a destination SA chip, and the manner of obtaining a bandwidth according to the bitmap may be implemented using the conventional technology in the art, which is not described herein again.

In the actual implementation process, the calculation methods of bandwidth (including the destination bandwidth and the source bandwidth) are different according to whether the destination SA is a remote SA or a local SA.

In an exemplary embodiment, acquiring the destination bandwidth and the source bandwidth on the basis of the destination bitmap and the source bitmap respectively includes: in a case where the destination SA is a remote SA, the destination bandwidth is a valid link bandwidth of a valid link connected to a remote egress of the SF1, and the source bandwidth is the sum of valid link bandwidths of all the local SAs connected to the SF1. In an exemplary embodiment, acquiring the destination bandwidth and the source bandwidth on the basis of the destination bitmap and the source bitmap respectively, further includes: in a case where the destination SA is a local SA, the destination bandwidth is a sum of valid link bandwidths of local SAs connected to the SF1, and the source bandwidth is a valid link bandwidth of each local SA connected to the SF1.

Step S304: a first weight coefficient is determined on the basis of the destination bandwidth and the source bandwidth, and the destination bandwidth is allocated to a source Switch Access (SA) according to the first weight coefficient.

In an exemplary embodiment, determining the first weight coefficient on the basis of the destination bandwidth and the source bandwidth includes: in a case where the destination SA is a remote SA, the first weight coefficient is a ratio of a valid link bandwidth of each source SA to the destination bandwidth; and in a case where the destination SA is a local SA, each destination SA corresponds to one source SA, and the first weight coefficient is 1.

In the actual implementation process, the first weight coefficient is applied to different SAs, and as stated above, the value of the first weight coefficient varies depending on whether the destination SA is a remote SA or a local SA. In addition, in the actual implementation process, the initial value of the weight coefficient for the valid link bandwidth of each source SA is configured according to the topology structure of the switching network and the link weight; and during the process where the SF1 sends routing information to the source end for each destination SA, the valid link bandwidth of the source SA is calculated to update the weight coefficient.

Step S306: a second weight coefficient is determined on the basis of a duty ratio of a valid link of the source SA; and the destination bandwidth, which is allocated to the source SA, is allocated to the valid link of the source SA according to the second weight coefficient, so as to realize routing information processing process.

In the actual implementation process, the second weight coefficient is applied to different valid links of the same SA; the specific value of the second weight coefficient is related to a proportion of bandwidth that can be borne by the valid link; and the source SA determines, according to a duty ratio of received Routing Information (RI), the amount of traffic that can be transmitted by the link. The specific relationship between the duty ratio and the amount of the traffic that can be transmitted on the link is described in details in the following scenario embodiments, which is not described herein again.

In an exemplary embodiment, the method further includes: the SF1 sending routing information to the source SA, wherein the routing information is used for indicating the first weight coefficient and the second weight coefficient.

By means of the described steps, provided is a routing information processing method for asymmetrical routing, including: acquiring a destination bandwidth and a source bandwidth of a first-stage switch fabric SF1; determining a first weight coefficient on the basis of the destination bandwidth and the source bandwidth, and allocating the destination bandwidth to a source Switch Access (SA) according to the first weight coefficient; and determining a second weight coefficient on the basis of the duty ratio of a valid link of the source SA, and allocating the destination bandwidth, which is allocated to the source SA, to the valid link of the source SA according to the second weight coefficient, so as to realize routing information processing process. The embodiments of the present disclosure solve the problems in the related art of local congestion and packet loss when the first-stage switch fabric SF1 in a three-stage switching network system is asymmetrical, and achieve the effect of more smooth and uniform traffic allocation in the three-stage switching network system.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the embodiments of the present disclosure, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

The present embodiment further provides a routing information processing apparatus for asymmetrical routing, the apparatus is used for implementing the embodiments and preferred embodiments above, and what has been described will not be described repeatedly here. As used below, the term "module" may implement a combination of software and/or hardware of predetermined functions. Although the apparatus described in the following embodiments is preferably implemented in software, implementation in hardware or a combination of software and hardware is also possible and conceived.

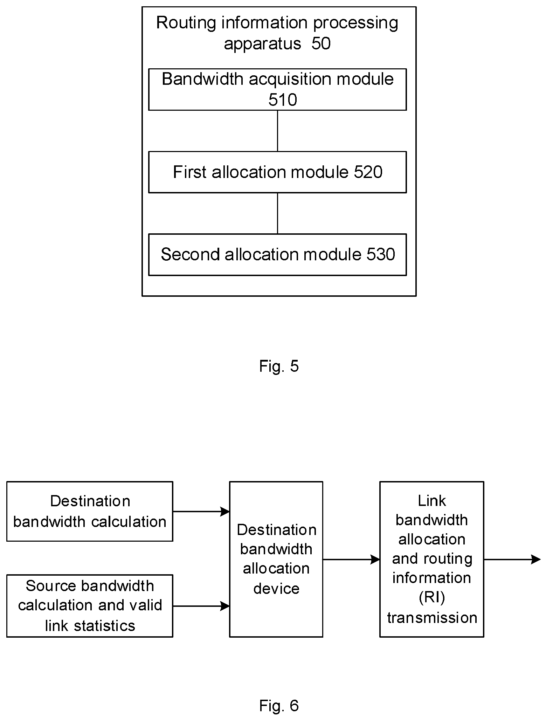

Fig. 5 is a structural block diagram of a routing information processing apparatus for asymmetrical routing according to an embodiment of the present disclosure. As shown in Fig. 5, the routing information processing apparatus 50 includes: a bandwidth acquisition module 510, configured to acquire a destination bandwidth and a source bandwidth of a first-stage switch fabric SF1; a first allocation module 520, configured to determine a first weight coefficient on the basis of the destination bandwidth and the source bandwidth, and allocate the destination bandwidth to a source switch access (SA) according to the first weight coefficient; and a second allocation module 530, configured to determine a second weight coefficient on the basis of a duty ratio of a valid link of the source SA, and allocate the destination bandwidth, which is allocated to the source SA, to the valid link of the source SA according to the second weight coefficient, so as to realize routing information processing.

In an exemplary embodiment, the routing information processing apparatus 50 can further include: a marking module, configured to set a first tag signal and a second tag signal for SAs and switch links of the first-stage switch fabric SF1 respectively, wherein the first tag signal is used for indicating that the SAs are local SAs or remote SAs, and the second tag signal is used for indicating that the switch links are local links or remote links.

In an exemplary embodiment, the bandwidth acquisition module 510 may include: a bitmap acquisition unit, configured to acquire a destination bitmap of a destination SA and a source bitmap of a source SA on the basis of the second tag signal; and a bandwidth acquisition unit, configured to respectively acquire the destination bandwidth and the source bandwidth on the basis of the destination bitmap and the source bitmap.

In an exemplary embodiment, the bandwidth acquisition unit acquires the bandwidth differently depending on whether the destination SA is a remote SA or a local SA. In a case where the destination SA is a remote SA, the destination bandwidth is a valid link bandwidth of a valid link connected to a remote egress of the SF1, and the source bandwidth is a sum of valid link bandwidths of all the local SAs connected to the SF1. In a case where the destination SA is a local SA, the destination bandwidth is a sum of valid link bandwidths of the local SAs connected to the SF1, and the source bandwidth is a valid link bandwidth of each local SA connected to the SF1.

In an exemplary embodiment, the method for the first allocation module 520 to determine the first weight coefficient according to the target bandwidth and the source bandwidth is that: in a case where the destination SA is a remote SA, the first weight coefficient is a ratio of a valid link bandwidth of each source SA to the destination bandwidth; and in a case where the destination SA is a local SA, each destination SA corresponds to one source SA, and the first weight coefficient is 1.

In an exemplary embodiment, the routing information processing apparatus 50 can further include: a routing sending module, configured to send routing information to the source SA, wherein the routing information is used for indicating the first weight coefficient and the second weight coefficient. In the actual implementation process, the routing sending module may be disposed in the SF1.

It should be noted that the modules above may be implemented by software or hardware, and the latter may be implemented in the following manner, but is not limited thereto. All the modules above are located in the same processor; or all the modules above are located in different processors in any arbitrary combination manner.

The embodiments of the present disclosure further provide a computer readable storage medium storing a computer program, wherein the computer program is configured to execute, when running, the steps in any one of the described method embodiments.

In an exemplary embodiment, the computer readable storage medium may include, but is not limited to, any medium that can store a computer program, such as a USB flash drive, a Read-Only Memory (ROM), a Random Access Memory (RAM), a removable hard disk, a magnetic disk, or an optical disc.

The embodiments of the present disclosure further provide an electronic apparatus, including a memory and a processor; the memory stores a computer program, and the processor is configured to run the computer program, so as to execute the operations in any one of the above method embodiments.

In an exemplary embodiment, the electronic apparatus can further include a transmission device and an input/output device, wherein the transmission device is connected to the processor, and the input/output device is connected to the processor.

For examples in the present embodiment, reference can be made to the examples described in the above embodiments and exemplary embodiments, and thus they will not be repeated again in the present embodiment.

Obviously, those skilled in the art should understand that the modules or steps in the embodiments of the present disclosure can be implemented by using a general computing device, and they can be integrated in a single computing device, and can also be distributed over a network consisting of a plurality of computing devices. They may be implemented by using executable program codes of the computing devices. Thus, they can be stored in a storage device and executed by the computing devices. Furthermore, in some cases, the shown or described steps may be executed in an order different from that described here, or they can be respectively implemented by individual Integrated Circuit modules, or they can be implemented by making a plurality of the modules or steps into a single Integrated Circuit module. Thus, the embodiments of the present disclosure are not limited to any specific hardware and software combinations.

In order to enable those skilled in the art to better understand the technical solutions of the embodiments of the present disclosure, descriptions will be given below with reference to scenario embodiments.

### Scenario Embodiment 1

Fig. 6 is a schematic flow diagram of a routing information processing method for asymmetrical routing according to an embodiment of the present disclosure. As shown in Fig. 6, first, calculations for the destination bandwidth and the source bandwidth are performed, and valid link statistics are performed; then, the destination bandwidths are allocated, which can be achieved by constructing a destination bandwidth allocation device in SF1, wherein the destination bandwidth allocation device can be a chip product. Finally, link bandwidth allocation and Routing Information (RI) transmission are performed to implement routing information processing.

In the present scenario embodiment, the physical bandwidths of all the links of the source end and the physical bandwidths of all the links of the destination end of the SF1 are respectively calculated to determine the sending of the Routing Information (RI) of the SF1 to the source SA; and the traffic that can be sent by the source end is reduced by closing the routing of the source end, thereby preventing the SF1 from being congested.

Step 1: Configure a group of local/remote SA tag signals sa_id_mode and a group of link tag signals link tag in SF1, wherein a sa_id_mode signal corresponds to the destination SA of the SF1 on a one-to-one basis, sa_id_mode being equal to 0 indicates that the destination SA corresponding to the SF1 is a local SA, and sa_id_mode being equal to 1 indicates that the destination SA corresponding to the SF1 is a remote SA; a link tag signal corresponds to a link of the SF1 on a one-to-one basis, wherein the link tag being equal to 0 indicates that the destination corresponding to the link is a local SA and is a local link of the SF1, and the link tag being equal to 1 indicates that a destination corresponding to the link is a remote SA and is a remote link of the SF1.

Step 2: Determine whether the destination SA is a remote SA or a local SA according to the sa_id_mode signal; and calculate a destination link bandwidth (i.e. a destination bandwidth) and a source link bandwidth (i.e. a source bandwidth) according to the link tag signal.

If the destination of the SF1 is a remote SA, a destination bitmap (the bitmap represents a path connection relationship between a local chip and a destination SA chip) corresponding to the remote link is distinguished by means of a link tag to calculate the destination bandwidth, wherein the destination bandwidth is a valid link bandwidth of a valid link connected to a remote egress of the SF1.Then, the source bitmap corresponding to the local link is distinguished by means of the link tag; and the number of valid links of each source SA and the bandwidth of each source SA are calculated, wherein the sum of the valid link bandwidths of all the local SAs is the source bandwidth.

If the destination of the SF1 is a local SA, a destination bitmap corresponding to the local link is distinguished by means of a link tag to calculate a destination bandwidth, wherein the destination bandwidth is the sum of valid link bandwidths of the local SAs connected to the SF1. Then, the source bitmap corresponding to the local link is distinguished by means of the link tag; and the number of valid links of each source SA and the bandwidth of each source SA are calculated, wherein the source bandwidth is a valid link bandwidth of each local SA connected to an SF1.

Step 3: Set a destination bandwidth allocation device in the SF1; during the SF1 asymmetry calculation process, the valid link bandwidth of each source SA is respectively counted for each destination SA; and the destination bandwidth is allocated to each source SA in proportion to the weight according to the valid link bandwidth of the source SA. The initial value of the weight coefficient for the valid link bandwidth of each source SA is configured according to the topology structure of the switching network and the link weight; and during the process of the SF1 sending routing information to the source SA for each destination SA, the weight coefficient of the valid link bandwidth of the source SA is updated.

For the destination of the SF1 being a remote SA, the asymmetry calculation considers the source as all local SAs, and the bandwidth weight coefficient for each SA is the valid link bandwidth of a single source SA/the destination bandwidth, i.e., the first weight coefficient is the ratio of the valid link bandwidth of each source SA to the destination bandwidth.

For the destination of the SF1 being a local SA, the asymmetry calculation considers the source as each individual SA, i.e., each destination SA corresponds to a single source SA, and thus the bandwidth weight coefficient thereof 1.

Step 4: Allocate the bandwidth allocated to each source SA according to the weight of each link of the source SA, and the link bandwidth weight is configured according to the ratio of the actual physical link bandwidth.

Step 5: When sending the Routing Information (RI) to the source SA link, the traffic allocated to each link is considered; in the present scenario embodiment, 5-bit Routing Information (RI) is designed to represent the bandwidth ratio that can be born by the link, for example, the Routing Information (RI) of a certain link being 5'b11111 indicates that the link can send traffic at the full physical bandwidth; the Routing Information (RI) being 5'b10000 indicates that the link can only send traffic at 20% of the physical bandwidth. The source SA judges,the amount of traffic that the link can send according to the duty ratio of the received RI.

In conclusion, the embodiments of the present disclosure provide a routing information processing method and apparatus for asymmetric routing, which can solve the problem of asymmetrical congestion occurring in the SF1 in the three-stage switching network of the packet switching system. When the destination of the first-stage switch fabric SF1 is a remote SA, the destination bandwidth is calculated on the basis of the valid links at the remote egress of the SF1; the source bandwidth is the sum of the valid link bandwidths of all local SAs connected to SF1; and routing information is sent to the source links on the basis of the destination bandwidth. When the destination of the SF1 is the local SA, the destination bandwidth is the sum of the link bandwidths between the SF1 and the local SA, and the source bandwidth is the link bandwidth of each individual local SA connected to SF1; similarly, routing information is sent to the source links on the basis of the destination bandwidth. A destination bandwidth allocation device can be provided at the SF1; during the SF1 asymmetry calculation process, the valid link bandwidth of each source SA is respectively counted for each destination SA; and the destination bandwidth is allocated to each source SA in proportion to the weight according to the valid link bandwidth of the source SA. When routing information is sent to the source SA links, the bandwidth allocated to each source SA is allocated to the valid links of the SA according to the link weights. The proportion of bandwidth that can be carried by the link may be indicated by 5-bit RI, and the source SA determines the amount of traffic that the link can send according to the duty ratio of the received Routing Information (RI).

According to the routing information processing method and apparatus for asymmetrical routing provided in the embodiments of the present disclosure, compared with the SF1 asymmetry in the prior art, when the source bandwidth is greater than the destination bandwidth, one source end link is directly closed. In the embodiments of the present disclosure, by distinguishing whether the destination of the SF1 is a remote SA or a local SA, the bandwidth of the destination SA and the bandwidth of the source SA are calculated respectively, and the destination bandwidth is allocated to the source SA according to the weight. The asymmetric routing transmission processing method provided by the embodiments of the present disclosure reasonably allocates link bandwidth, and at the same time, avoids the on-off state of the link routes when reducing the source link bandwidth, making the system traffic distribution smoother and more uniform.

The content above only relates to preferred embodiments of the embodiments of present disclosure, and is not intended to limit the embodiments of the present disclosure. For a person skilled in the art, the embodiments of the present disclosure may have various modifications and changes. Any modifications, equivalent replacements, improvements, etc. made within the principle of the embodiments of the present disclosure shall all fall within the scope of protection of the embodiments of the present disclosure.

## Claims

1. A routing information processing method for asymmetric routing, comprising:
acquiring a destination bandwidth and a source bandwidth of a first-stage switch fabric SF1;
determining a first weight coefficient on the basis of the destination bandwidth and the source bandwidth, and allocating the destination bandwidth to a source switch access, SA, according to the first weight coefficient; and
determining a second weight coefficient on the basis of a duty ratio of a valid link of the source SA, and allocating the destination bandwidth, which is allocated to the source SA, to the valid link of the source SA according to the second weight coefficient, so as to realize routing information processing.

2. The method according to claim 1, wherein before acquiring the destination bandwidth and the source bandwidth of the first-stage switch fabric SF1, the method further comprising:
setting a first tag signal and a second tag signal for SAs and switch links of the first-stage switch fabric SF1 respectively, wherein the first tag signal is used for indicating that the SAs are local SAs or remote SAs, and the second tag signal is used for indicating that the switch links are local links or remote links.

3. The method according to claim 2, wherein acquiring the destination bandwidth and the source bandwidth of the first-stage switch fabric SF1 comprises:
acquiring a destination bitmap of a destination SA and a source bitmap of the source SA on the basis of the second tag signal; and
acquiring the destination bandwidth and the source bandwidth on the basis of the destination bitmap and the source bitmap respectively.

4. The method according to claim 3, wherein acquiring the destination bandwidth and the source bandwidth on the basis of the destination bitmap and the source bitmap respectively, comprises:
in a case where the destination SA is a remote SA, the destination bandwidth is a valid link bandwidth of a valid link connected to a remote egress of the SF1, and the source bandwidth is a sum of valid link bandwidths of all local SAs connected to the SF1.

5. The method according to claim 3, wherein acquiring the destination bandwidth and the source bandwidth on the basis of the destination bitmap and the source bitmap respectively, further comprises:
in a case where the destination SA is a local SA, the destination bandwidth is a sum of valid link bandwidths of local SAs connected to the SF1, and the source bandwidth is a valid link bandwidth of each local SA connected to the SF1.

6. The method according to claim 1, wherein determining the first weight coefficient on the basis of the destination bandwidth and the source bandwidth comprises:
in a case where the destination SA is a remote SA, the first weight coefficient is a ratio of a valid link bandwidth of each source SA to the destination bandwidth; and
in a case where the destination SA is a local SA, each destination SA corresponds to one source SA, and the first weight coefficient is 1.

7. The method according to claim 1, further comprising:
sending, by the SF1, routing information to the source SA, wherein the routing information is used for indicating the first weight coefficient and the second weight coefficient.

8. A routing information processing apparatus for asymmetric routing, comprising:
a bandwidth acquisition module, configured to acquire a destination bandwidth and a source bandwidth of a first-stage switch fabric SF1;
a first allocation module, configured to determine a first weight coefficient on the basis of the destination bandwidth and the source bandwidth, and allocate the destination bandwidth to a source switch access, SA, according to the first weight coefficient; and
a second allocation module, configured to determine a second weight coefficient on the basis of a duty ratio of a valid link of the source SA, and allocate the destination bandwidth, which is allocated to the source SA, to the valid link of the source SA according to the second weight coefficient, so as to realize routing information processing.

9. A computer readable storage medium, storing a computer program therein, wherein the computer program, when executed by a processor, implements the method according to any one of claims 1 to 7.

10. An electronic apparatus, comprising a memory, a processor, and a computer program stored in the memory and executable on the processor, wherein the processor, when executing the computer program, implements the method according to any one of claims 1 to 7.
